# EUROPEAN PATENT APPLICATION

(11) **EP 4 787 915 A1**
(43) Date of publication of application: **05.08.2026**
(21) Application number: 23954254.1
(22) Date of filing: 27.09.2023
(51) Int. Cl.: H04W 8/22, H04W 28/18

(54) **TERMINAL**

(71) Applicant: NTT DOCOMO, INC., Tokyo 100-6150 (JP)
(72) Inventor: MIN, Tianyang, Tokyo 100-6150 (JP); SAGAE, Yuta, Tokyo 100-6150 (JP)
(74) Representative: Hoffmann Eitle
(86) International application number: PCT/JP2023/035259
(87) International publication number: WO 2025/069278

(57) **Abstract**

A terminal includes a control unit configured to determine whether estimation accuracy of a learning model falls below a first threshold, and a transmission unit configured to transmit that the learning model has become not applicable when the estimation accuracy falls below the first threshold.

## Description

### TECHNICAL FIELD

The present disclosure relates to a terminal using a learning model.

### BACKGROUND ART

The 3rd Generation Partnership Project (3GPP) has specified the 5th generation mobile communication system (also referred to as 5G, New Radio (NR), or Next Generation (NG)), and is also proceeding with the specification of a next generation mobile communication system called Beyond 5G, 5G Evolution, or 6G.

In Release 18 of 3GPP, introduction of Artificial Intelligence (AI)/Machine Learning (ML) has been discussed. AI/ML models (hereinafter also referred to as learning models) are applied to a terminal (User Equipment, UE) by being downloaded from a base station (gNodeB, gNB). By applying the learning model, improvement in performance in Channel State Information (CSI) feedback, beam management (BM), positioning, mobility, network slicing, Quality of Experience (QoE), and the like is expected.

Download of the learning model includes Reactive model transfer/delivery performed in accordance with a change in an environment surrounding the UE (for example, a scenario, a configuration, or a usage location) and Proactive model transfer/delivery performed in advance. In the latter case, among a plurality of learning models downloaded in advance, a learning model to be applied is switched in accordance with a change in the environment surrounding the UE (Non-Patent Literature 1).

### CITATION LIST

### NON-PATENT LITERATURE

Non-Patent Literature 1: "Report of 3GPP TSG RAN WG2 meeting #123", 3GPP TSG-RAN WG2 Meeting #123, 3GPP, August 21-25, 2023

### SUMMARY OF INVENTION

In Proactive model transfer/delivery, it is conceivable that the UE recognizes a change in an environment surrounding the UE, deems that a downloaded learning model no longer satisfies an applicability condition, and reports to that effect to the gNB. However, for example, when the change is small, the learning model does not necessarily cease to satisfy the applicability condition. Reporting every time the environment surrounding the UE changes leaves room for improvement from the viewpoint of resource utilization efficiency.

Therefore, the present disclosure has been made in view of such a situation, and an object thereof is to provide a terminal capable of reporting that a learning model has become not applicable at an appropriate timing so as to suppress waste of resources.

One aspect of the disclosure is a terminal including a control unit (estimation accuracy determination unit 260) configured to determine whether estimation accuracy of a learning model falls below a first threshold, and a transmission unit (transmission/reception unit 210) configured to transmit that the learning model has become not applicable when the estimation accuracy falls below the first threshold.

### BRIEF DESCRIPTION OF DRAWINGS

[Fig. 1] Fig. 1 is an overall schematic configuration diagram of a radio communication system.
[Fig. 2] Fig. 2 is a diagram showing frequency ranges used in the radio communication system.
[Fig. 3] Fig. 3 is a diagram showing a configuration example of a radio frame, a subframe, a slot, and a symbol used in the radio communication system.
[Fig. 4] Fig. 4 is a functional block diagram of a terminal.
[Fig. 5] Fig. 5 is a functional block diagram of a base station.
[Fig. 6] Fig. 6 is a sequence chart regarding reporting of applicability of a learning model.
[Fig. 7] Fig. 7 is a sequence chart regarding a request for a learning model.
[Fig. 8] Fig. 8 is a sequence chart regarding determination of applicability of a learning model in a terminal.
[Fig. 9] Fig. 9 is a sequence chart regarding determination of applicability of a learning model in a base station.
[Fig. 10] Fig. 10 is a sequence chart regarding deactivation or switching of a learning model in a terminal.
[Fig. 11] Fig. 11 is a diagram showing an example of a hardware configuration of a base station and a terminal.
[Fig. 12] Fig. 12 is a diagram showing a configuration example of a vehicle.

### DESCRIPTION OF EMBODIMENTS

Hereinafter, embodiments will be described with reference to the drawings. Note that the same functions and configurations are denoted by the same or similar reference numerals, and description thereof will be omitted as appropriate.

### (1) Overall Schematic Configuration of Radio Communication System

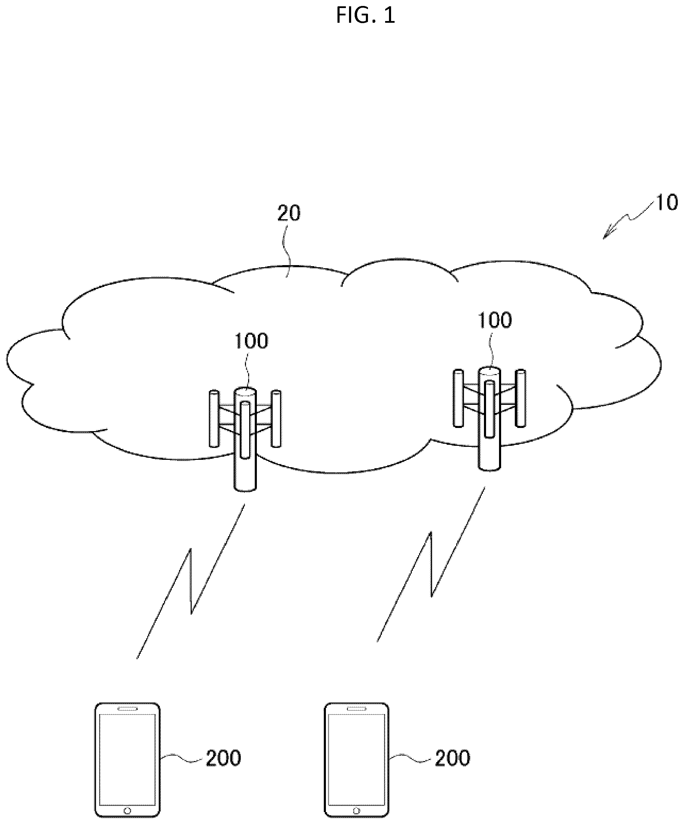

A radio communication system 10 shown in Fig. 1 is a radio communication system according to a scheme called 5G. On the other hand, the radio communication system 10 may be a radio communication system according to a scheme called Beyond 5G, 5G Evolution, or 6G.

The radio communication system 10 can support Massive Multiple-Input Multiple-Output (Massive MIMO) that generates a beam with higher directivity by controlling radio signals transmitted from a plurality of antenna elements, Carrier Aggregation (CA) that bundles and uses a plurality of component carriers (CCs), Dual Connectivity (DC) that performs communication with two base stations simultaneously, and the like.

As shown in Fig. 1, the radio communication system 10 includes a base station (gNodeB, gNB) 100 connected to a Next Generation-Radio Access Network (NG-RAN) 20, and a terminal (User Equipment, UE) 200 performing radio communication with the gNB 100. The NG-RAN 20 is connected to a Core Network (CN) (not shown). The CN is configured by Network Functions (NFs) such as an Access and Mobility Management Function (AMF). Note that a specific configuration of the radio communication system 10, for example, the numbers of gNBs 100 and UEs 200, is not limited to the example shown in Fig. 1. In addition, the NG-RAN 20 and the CN may be simply expressed as a "network", and may be interpreted as being included in the radio communication system 10 or may be interpreted as not being included therein.

The gNB 100 may be a base station of a Centralized-Radio Access Network (C-RAN) configuration having a Distributed Unit (DU) having a function for connecting to the UE 200 and a Central Unit (CU) having a function for connecting to the network. In this case, the gNB 100 may be read as the DU or may be read as the CU. When the gNB 100 is the DU, it may be referred to as a gNB-DU, an Integrated Access and Backhaul (IAB) node, a radio communication node, or the like. Similarly, when the gNB 100 is the CU, it may be referred to as a gNB-CU, an IAB donor, or the like.

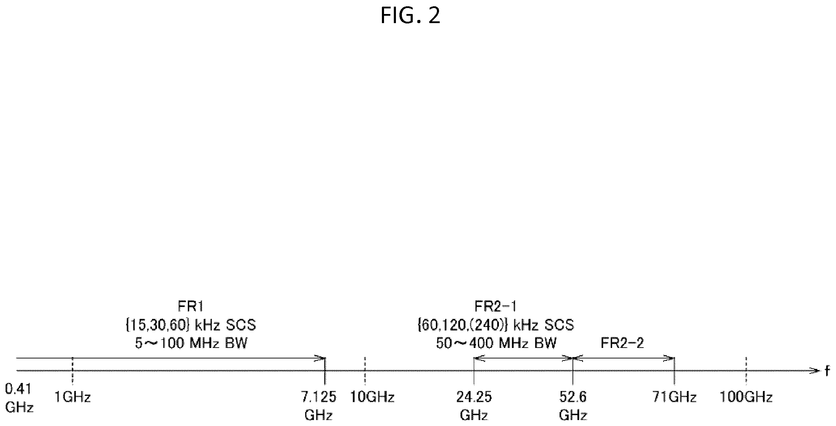

Further, the radio communication system 10 may support a plurality of Frequency Ranges (FRs). That is, as shown in Fig. 2, the radio communication system 10 may support the following FRs.
- FR1: 410 MHz to 7.125 GHz
- FR2-1: 24.25 GHz to 52.6 GHz
- FR2-2: Exceeding 52.6 GHz to 71 GHz

In FR1, a Sub-Carrier Spacing (SCS) of 15, 30, or 60 kHz and a Bandwidth (BW) of 5 to 100 MHz may be used. In FR2-1, an SCS of 60 or 120 kHz (240 kHz may be included) and a BW of 50 to 400 MHz may be used.

In FR2-2, Cyclic Prefix-Orthogonal Frequency Division Multiplexing (CP-OFDM) or Discrete Fourier Transform-Spread-Orthogonal Frequency Division Multiplexing (DFT-S-OFDM) having a larger SCS may be applied in order to avoid an increase in phase noise.

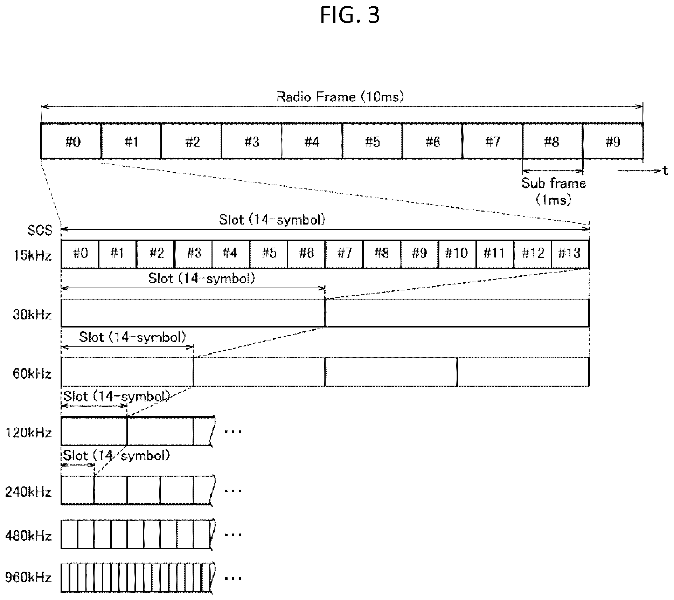

Further, as shown in Fig. 3, one slot in the radio communication system 10 is composed of 14 symbols. When this configuration is maintained, the larger (wider) the SCS is, the shorter the symbol period (and the slot period) is. Note that the SCS is not limited to the frequencies shown in Fig. 3, and may be a frequency such as 480 kHz or 960 kHz, for example.

Further, the number of symbols constituting one slot does not necessarily have to be 14 symbols, and may be, for example, 28 or 56 symbols. Furthermore, the number of slots per subframe may vary depending on the SCS.

### (2) Functional Block Configuration of Radio Communication System

### (2.1) Functional Block Configuration of Terminal

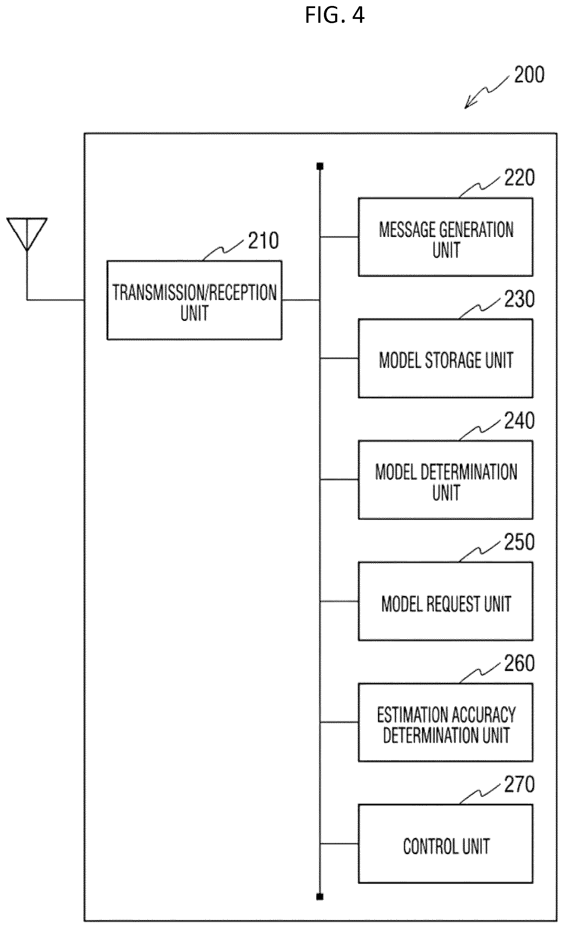

As shown in Fig. 4, the UE 200 includes a transmission/reception unit 210, a message generation unit 220, a model storage unit 230, a model determination unit 240, a model request unit 250, an estimation accuracy determination unit 260, and a control unit 270.

The transmission/reception unit 210 transmits and receives radio signals to and from the gNB 100. The transmission/reception unit 210 may constitute a transmission unit configured to transmit radio signals to the gNB 100 and a reception unit configured to receive radio signals from the gNB 100. Transmission may be read as reporting, notification, or the like. Reception may be read as configuration (being configured), indication (being indicated), or the like. The radio signals include, for example, a message or a Measurement Report (MR) generated by the message generation unit 220. As will be described later, the message or the MR may include that the learning model is not applicable (or has become not applicable). That is, the transmission/reception unit 210 can transmit that the learning model is not applicable (or has become not applicable).

Here, the determination that the learning model has become not applicable is performed by the estimation accuracy determination unit 260 described later based on a threshold described later. That is, the transmission/reception unit 210 can transmit that the learning model has become not applicable when estimation accuracy of the learning model falls below a first threshold. Further, the transmission/reception unit 210 can transmit that the learning model has become not applicable when the number of times the estimation accuracy of the learning model falls below the first threshold exceeds a second threshold. Alternatively, the transmission/reception unit 210 can transmit that the learning model has become not applicable when a timer described later expires without the estimation accuracy of the learning model returning to the first threshold or higher in a period measured by the timer.

Further, as will be described later, the message or the MR may include a reason why the learning model is not applicable (or a reason why the learning model has become not applicable) and a request for a necessary learning model. That is, the transmission/reception unit 210 can transmit the reason why the learning model has become not applicable. Further, the transmission/reception unit 210 can transmit a request for a necessary learning model based on this reason.

The message generation unit 220 generates a message or an MR to be transmitted to the gNB 100. The message may be, for example, RRCReconfigurationComplete, UEAssistanceInfo, RRCSetupComplete, RRCResumeComplete, or the like. Further, the message in the present embodiment may be interpreted as including not only a Radio Resource Control (RRC) message but also a Medium Access Control Control Element (MAC CE) or Downlink Control Information (DCI). The message or the MR of the present embodiment may include contents related to the learning model, such as a determination result or a determination reason by the model determination unit 240, a proposal/request by the model request unit 250, and a determination result or estimation accuracy by the estimation accuracy determination unit 260. Details will be described in the section of Operation Examples.

The model storage unit 230 stores a learning model that the UE 200 (control unit 270) applies to itself and uses. The learning model may be pre-installed at the time of shipment, or a learning model received (downloaded) from the gNB 100 may be installed as described later. The learning model optimizes processing related to, for example, Channel State Information (CSI) feedback, beam management (BM), positioning, mobility, network slicing, QoE, and the like.

The model determination unit 240 determines whether or not the learning model that the UE 200 (control unit 270) applies to itself satisfies an applicability condition (hereinafter also referred to as applicability). The applicability of the learning model is determined based on, for example, an environment surrounding the UE 200, specifications of the UE 200, and the like (hereinafter also simply referred to as the environment surrounding the UE 200). The environment surrounding the UE 200 is, for example, a UE moving speed, a channel model (e.g., urban macrocell (UMa)/urban microcell (UMi)), an inter-site distance (ISD), a frequency, a BWP, an antenna port layout, or a size of the learning model.

When the learning model is applicable, the model determination unit 240 includes that effect in the message or the MR described above. Further, when the learning model is not applicable, the model determination unit 240 includes that effect in the message or the MR described above. Furthermore, when the learning model is not applicable, the model determination unit 240 can include a reason (cause) why the learning model is not applicable in the message or the MR described above.

Note that the determination may be performed intermittently at predetermined intervals or may be performed continuously. The model determination unit 240 may continue to monitor the applicability condition of the learning model (for example, the UE moving speed), and when detecting that the learning model is not applicable, may include that effect in the message or the MR described above.

The model request unit 250 includes a proposal/request for a learning model satisfying the applicability condition (hereinafter also referred to as a necessary learning model) in the message or the MR described above. The proposal/request for the necessary learning model may be read as information related to the environment surrounding the UE. In this case, it is sufficient that the gNB 100 receiving the message or the MR can determine the necessary learning model based on the information related to the environment surrounding the UE included in the message or the MR.

The estimation accuracy determination unit 260 determines whether or not the estimation accuracy of the learning model falls below a predetermined threshold (first threshold). That is, when the estimation accuracy of the learning model falls below the first threshold, the estimation accuracy determination unit 260 determines that the learning model has become not applicable. Here, the first threshold is, for example, estimation accuracy of 90%. Note that the estimation accuracy determination unit 260 may be interpreted as corresponding to the "control unit" in the claims.

The estimation accuracy determination unit 260 can also determine that the learning model has become not applicable based on other determination criteria. For example, the estimation accuracy determination unit 260 may count the number of times the estimation accuracy of the learning model falls below the first threshold, and may determine that the learning model has become not applicable when this number of times exceeds a predetermined threshold (second threshold). Here, the second threshold is, for example, a positive integer of 2 or more. Alternatively, the estimation accuracy determination unit 260 may start a timer measuring a predetermined period when the estimation accuracy of the learning model falls below the first threshold, and may determine that the learning model has become not applicable when this timer expires without the estimation accuracy of the learning model returning to the first threshold or higher.

The estimation accuracy determination unit 260 includes that the learning model has become not applicable in the message or the MR described above, regardless of which determination criterion is used. Alternatively, the estimation accuracy determination unit 260 may include the estimation accuracy of the learning model itself in the message or the MR described above. In this case, the gNB 100 may determine that the learning model has become not applicable.

Furthermore, the estimation accuracy determination unit 260 can estimate the reason why the learning model has become not applicable. The reason why the learning model has become not applicable may be estimated based on a change in the environment surrounding the UE 200 (or a change in a configuration parameter of the UE 200 according to the change in the environment), or the like. In this case, the estimation accuracy determination unit 260 may include the reason why the learning model has become not applicable in the message or the MR described above.

Note that the determination by the estimation accuracy determination unit 260 may be performed intermittently at predetermined intervals or may be performed continuously, similarly to the model determination unit 240. The estimation accuracy determination unit 260 may continue to monitor the estimation accuracy of the learning model, and when detecting that the learning model is not applicable based on the threshold described above, may include that effect in the message or the MR described above.

The control unit 270 controls the UE 200. The control unit 270 controls, for example, operations of the transmission/reception unit 210, the message generation unit 220, the model storage unit 230, the model determination unit 240, the model request unit 250, and the estimation accuracy determination unit 260.

The control unit 270 applies the learning model satisfying the applicability condition described above to itself and uses the learning model. Note that application may be read as activation, switching (from a currently applied learning model), or the like. By using the learning model, the UE 200 can optimize processing related to Channel State Information (CSI) feedback, beam management (BM), positioning, mobility, network slicing, QoE, and the like.

Specifically, the UE 200 can realize reduction of overhead, improvement in accuracy of CSI feedback, and the like by a learning model related to CSI feedback. Further, the UE 200 can estimate a beam with good quality at its own future position by a learning model related to BM. Alternatively, the UE 200 can accurately estimate its own future position by a learning model related to positioning.

The control unit 270 can deactivate a learning model that does not satisfy the applicability condition or a learning model that has ceased to satisfy the applicability condition. Further, the control unit 270 can set in advance a learning model not to be deactivated even when the applicability condition is no longer satisfied. Thereby, since the control unit 270 excludes the learning model set in advance from learning models to be deactivated, there is no possibility that all the learning models stored in the model storage unit 230 are deactivated.

### (2.2) Functional Block Configuration of Base Station

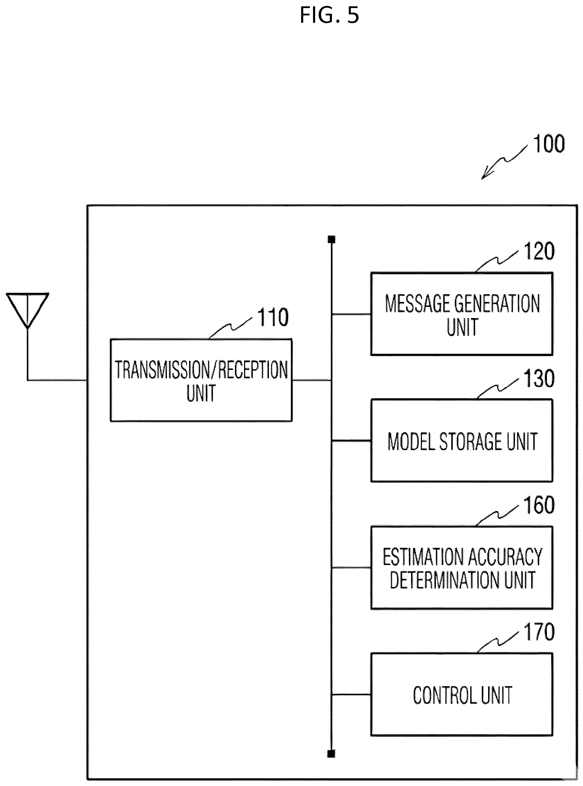

As shown in Fig. 5, the gNB 100 includes a transmission/reception unit 110, a message generation unit 120, a model storage unit 130, an estimation accuracy determination unit 160, and a control unit 170.

The transmission/reception unit 110 transmits and receives radio signals to and from the UE 200. The transmission/reception unit 110 may constitute a transmission unit configured to transmit radio signals to the UE 200 or another gNB 100 and a reception unit configured to receive radio signals from the UE 200 or another gNB 100. Transmission may be read as configuration, indication, or the like. Reception may be read as reporting (being reported), notification (being notified), or the like. The radio signals include, for example, a message generated by the message generation unit 120.

The message generation unit 120 generates a message to be transmitted to the UE 200. The message may be, for example, RRCReconfiguration or the like. Further, the message in the present embodiment may be interpreted as including not only a Radio Resource Control (RRC) message but also a Medium Access Control Control Element (MAC CE) or Downlink Control Information (DCI). The message of the present embodiment may include a learning model stored in the model storage unit 130, configuration information related to the learning model, and an instruction for switching/activation/deactivation of the learning model based on a determination result by the estimation accuracy determination unit 160. Details will be described in the section of Operation Examples.

The model storage unit 130 stores a learning model that the UE 200 (control unit 270) applies to itself and uses. The learning model optimizes processing related to, for example, Channel State Information (CSI) feedback, beam management (BM), positioning, mobility, network slicing, QoE, and the like.

The estimation accuracy determination unit 160 determines whether or not estimation accuracy of the learning model falls below a predetermined threshold (first threshold). That is, when the estimation accuracy of the learning model falls below the first threshold, the estimation accuracy determination unit 160 determines that the learning model has become not applicable.

The estimation accuracy determination unit 160 can also determine that the learning model has become not applicable based on other determination criteria. For example, the estimation accuracy determination unit 160 may count the number of times the estimation accuracy of the learning model falls below the first threshold, and may determine that the learning model has become not applicable when this number of times exceeds a predetermined threshold (second threshold). Alternatively, the estimation accuracy determination unit 160 may start a timer measuring a predetermined period when the estimation accuracy of the learning model falls below the first threshold, and may determine that the learning model has become not applicable when this timer expires without the estimation accuracy of the learning model returning to the first threshold or higher.

Furthermore, the estimation accuracy determination unit 160 can estimate a reason why the learning model has become not applicable. The reason why the learning model has become not applicable may be estimated based on a change in an AI inference value transmitted from the UE 200, or the like.

Note that the determination by the estimation accuracy determination unit 160 may be performed intermittently at predetermined intervals or may be performed continuously, similarly to the estimation accuracy determination unit 260. The estimation accuracy determination unit 160 may continue to monitor the estimation accuracy of the learning model, and when detecting that the learning model is not applicable based on the threshold described above, may include that effect in the message or the MR described above. In this case, it is assumed that the estimation accuracy of the learning model (AI inference value) is transmitted from the UE 200 intermittently or continuously.

The control unit 170 controls the gNB 100. The control unit 170 controls, for example, operations of the transmission/reception unit 110, the message generation unit 120, the model storage unit 130, and the estimation accuracy determination unit 160.

The control unit 170 can indicate, to the UE 200, a learning model to be applied by the UE 200. Note that application may be read as activation, switching (from a currently applied learning model), or the like. Similarly, the control unit 170 can indicate, to the UE 200, a learning model to be deactivated. These instructions may be realized by being included in the message described above and transmitted.

The control unit 170 can include the learning model stored in the model storage unit 130 in the message described above. In particular, the control unit 170 can include a learning model necessary for the UE 200 in the message described above based on a request from the model request unit 250 of the UE 200 or based on the reason why the learning model has become not applicable determined by the estimation accuracy determination unit 160.

The control unit 170 can set in advance a learning model not to be deactivated even when the applicability condition is no longer satisfied. Specifically, the control unit 170 can include a learning model not to be deactivated (hereinafter also referred to as a default learning model or a learning model to be absolutely active) and identification information thereof (for example, AI model ID) in the message described above. Thereby, since the control unit 170 excludes the learning model set in advance from learning models to be deactivated, there is no possibility that all the learning models stored in the model storage unit 230 of the UE 200 are deactivated.

### (3) Operation of Radio Communication System

### (3.1) Problem

### (3.1.1) Problem 1

The UE 200 may not satisfy the applicability condition of the learning model stored in advance in itself due to the configuration parameter of the UE 200 or the environment surrounding the UE 200. If the UE 200 does not satisfy the applicability condition of the learning model, there is a risk that the learning model cannot be used, and there is also a risk that the learning model may be used in a state where the estimation accuracy of the learning model is low.

### (3.1.2) Problem 2

The UE 200 may cease to satisfy the applicability condition even for a learning model that once satisfied the applicability condition, due to a change in the configuration parameter of the UE 200 or a change in the environment surrounding the UE 200. In such a case, it is conceivable that the UE 200 recognizes the change in the environment surrounding itself, deems that the downloaded learning model no longer satisfies the applicability condition, and reports to that effect to the gNB. However, for example, when the change is small, the learning model does not necessarily cease to satisfy the applicability condition. Reporting every time the environment surrounding the UE changes leaves room for improvement from the viewpoint of resource utilization efficiency.

### (3.1.3) Problem 3

It is conceivable that the UE 200 deactivates a learning model stored in advance in itself when the learning model does not satisfy the applicability condition. However, if all learning models stored in advance in the UE 200 are deactivated, there is a risk that the function related to the learning model in the UE 200 stops.

### (3.2) Operation Example

### (3.2.1) Operation Example 1

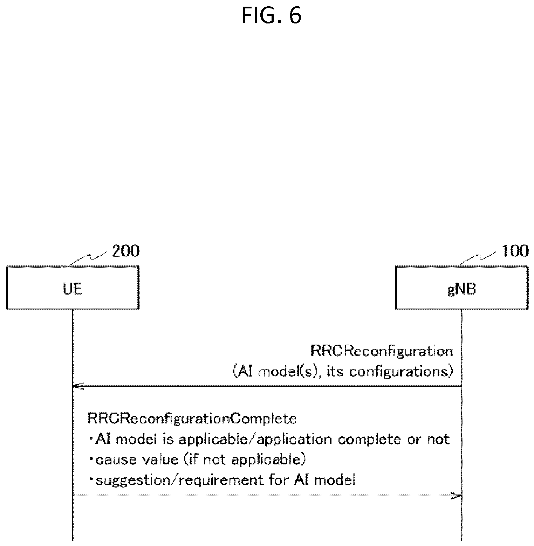

As shown in Fig. 6, the UE 200 receives an RRCReconfiguration message from the gNB 100. The RRCReconfiguration message may include one or more learning models, may include identification information of the learning model (for example, AI model ID), and may further include mapping information in which information related to an environment where the learning model is available (or preferably used) (for example, a scenario, a configuration, or a usage location) is associated.

The UE 200 may determine whether or not the learning model included in the RRCReconfiguration message satisfies the applicability condition, and report the following information to the gNB 100 via an RRCReconfigurationComplete message.

- Applicability of the learning model (application complete/incomplete)
- Note: Applicability of the learning model (application complete/incomplete) may be reported by 1 bit indicating either applicable/application complete or not applicable.
- Reason why the learning model does not satisfy the applicability condition (for example, UE moving speed, channel model (e.g., UMa/UMi), ISD, frequency, BWP, antenna port layout, size of the learning model)
- Proposal/request for a necessary learning model (for example, compatible with UE moving speed of 120 km/h, compatible with channel model of UMi, compatible with ISD of 500 m, compatible with frequency of 2 GHz, compatible with BWP of 100 MHz, compatible with antenna port layout of 4x4, compatible with size of 100 Mbytes or less)
- Note: The necessary learning model may be read as information related to the environment surrounding the UE. The same applies to the following description.

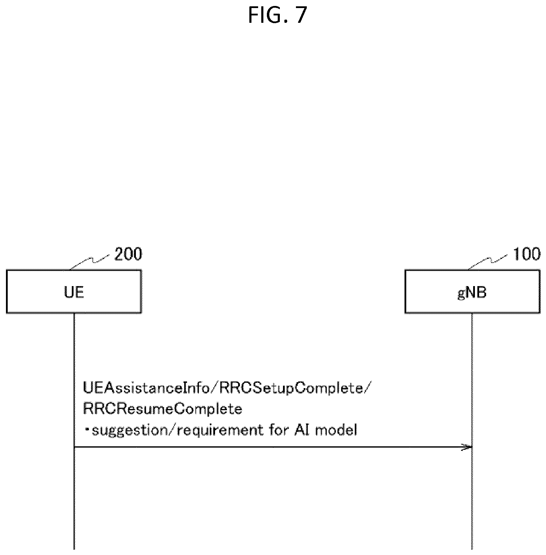

Further, as shown in Fig. 7, the UE 200 may propose/request a necessary learning model via a UEAssistanceInfo message or another UL message instead of the RRCReconfigurationComplete message. Note that the other UL message is, for example, an RRCSetupComplete message or an RRCResumeComplete message.

As described above, the UE 200 can report to the gNB 100 when the learning model stored in advance in itself does not satisfy the applicability condition. Further, the UE 200 can report not only that the applicability condition is not satisfied but also the reason therefor and the necessary learning model to the gNB 100.

### (3.2.2) Operation Example 2

### (3.2.2.1) Operation Example 2-1

The UE 200 may report to the gNB 100 that the applicability condition of the learning model is no longer satisfied, by an event based trigger. Note that the configuration related to the event based trigger may be performed via, for example, an RRCReconfiguration message. Further, the UE 200 may deactivate the learning model that no longer satisfies the applicability condition.

Specifically, the UE 200 may report to the gNB 100 that the applicability condition of the learning model is no longer satisfied when the estimation accuracy of the learning model (for example, accuracy (or confidence score) of AI inference value) falls below a predetermined threshold (first threshold). Further, the UE 200 may report to the gNB 100 that the applicability condition of the learning model is no longer satisfied when the number of times the estimation accuracy of the learning model falls below the predetermined threshold (first threshold) exceeds a predetermined number of times (second threshold).

Alternatively, the UE 200 may start a timer when the estimation accuracy of the learning model falls below the predetermined threshold (first threshold), or when the number of times the estimation accuracy of the learning model falls below the predetermined threshold (first threshold) exceeds the predetermined number of times (second threshold). The UE 200 may report to the gNB 100 that the applicability condition of the learning model is no longer satisfied when the estimation accuracy of the learning model does not become equal to or higher than the predetermined threshold (first threshold) before the timer expires. Note that the UE 200 may stop the timer when the estimation accuracy of the learning model becomes equal to or higher than the predetermined threshold (first threshold) before the timer expires.

Alternatively, the UE 200 may report to the gNB 100 that the applicability condition of the learning model is no longer satisfied when recognizing that the environment surrounding itself has changed. Such recognition may be performed, for example, by a change in the configuration parameter of the UE 200. In this case, similarly to Operation Example 1, the UE 200 may report the reason why the learning model no longer satisfies the applicability condition (for example, UE moving speed, channel model (e.g., UMa/UMi), ISD, frequency, BWP, antenna port layout, size of the learning model). Note that the UE 200 may explain a more specific reason, such as the UE moving speed having changed from 60 km/h to 120 km/h.

Furthermore, the UE 200 may propose/request a necessary learning model (for example, compatible with UE moving speed of 120 km/h, compatible with channel model of UMi, compatible with ISD of 500 m, compatible with frequency of 2 GHz, compatible with BWP of 100 MHz, compatible with antenna port layout of 4x4, compatible with size of 100 Mbytes or less).

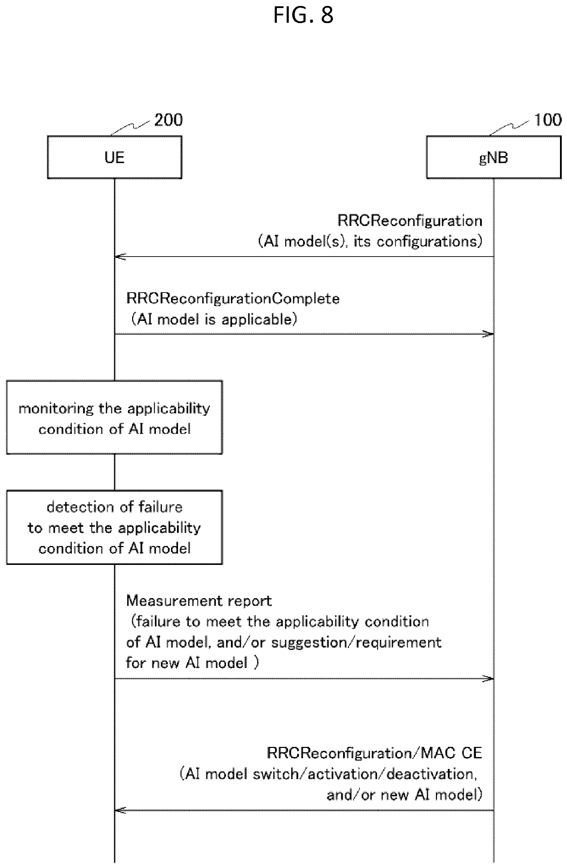

Operation Example 2-1 will be described with reference to Fig. 8. Similarly to Operation Example 1, the UE 200 receives a learning model via an RRCReconfiguration message, and further reports to the gNB 100 that the learning model satisfies the applicability condition. Thereafter, the UE 200 monitors that the applicability condition of the learning model is satisfied, and when detecting that the applicability condition of the learning model is no longer satisfied, reports to that effect to the gNB 100. Specifically, the UE 200 reports via a Measurement report that the applicability condition of the learning model is no longer satisfied. Further, simultaneously with this report, the UE 200 may report the reason why the applicability condition of the learning model is no longer satisfied (for example, because the UE moving speed is no longer suitable), and may further propose/request a necessary learning model (for example, a learning model compatible with the UE moving speed of 120 km/h).

In response to the report from the UE 200, the gNB 100 may transmit an RRCReconfiguration message or a MAC CE. The RRCReconfiguration message or the MAC CE may include an instruction to switch the learning model, may include an instruction to deactivate the learning model that no longer satisfies the applicability condition (and an instruction to activate a learning model that satisfies the applicability condition), and may include a new learning model.

### (3.2.2.2) Operation Example 2-2

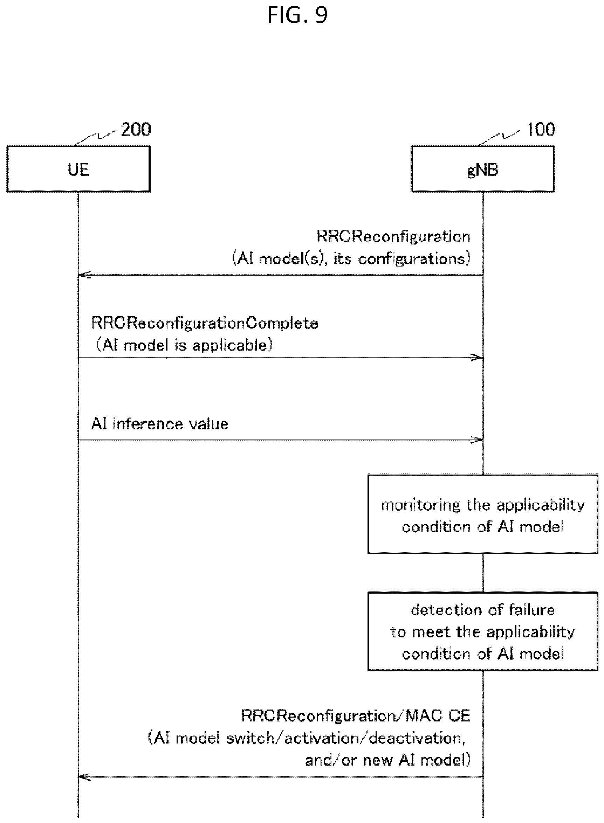

Instead of the UE 200, the gNB 100 may determine that the applicability condition of the learning model is no longer satisfied. The determination by the gNB 100 may be based on a threshold and/or a timer similarly to Operation Example 2-1, and description thereof is omitted here. As shown in Fig. 9, after reporting that the learning model received from the gNB 100 satisfies the applicability condition, the UE 200 may report an estimated value output using the learning model (AI inference value in the figure) to the gNB 100. Note that the report of the estimated value may be performed at a preset interval, or may be performed dynamically based on an instruction from the gNB 100.

The gNB 100 may monitor whether or not the applicability condition of the learning model is satisfied based on the received estimated value of the learning model. When detecting that the applicability condition of the learning model is no longer satisfied, the gNB 100 may transmit an RRCReconfiguration message or a MAC CE similarly to Operation Example 2-1. The RRCReconfiguration message or the MAC CE may include an instruction to switch the learning model, may include an instruction to deactivate the learning model that no longer satisfies the applicability condition (and an instruction to activate a learning model that satisfies the applicability condition), and may include a new learning model.

### (3.2.2.3) Operation Example 2-3

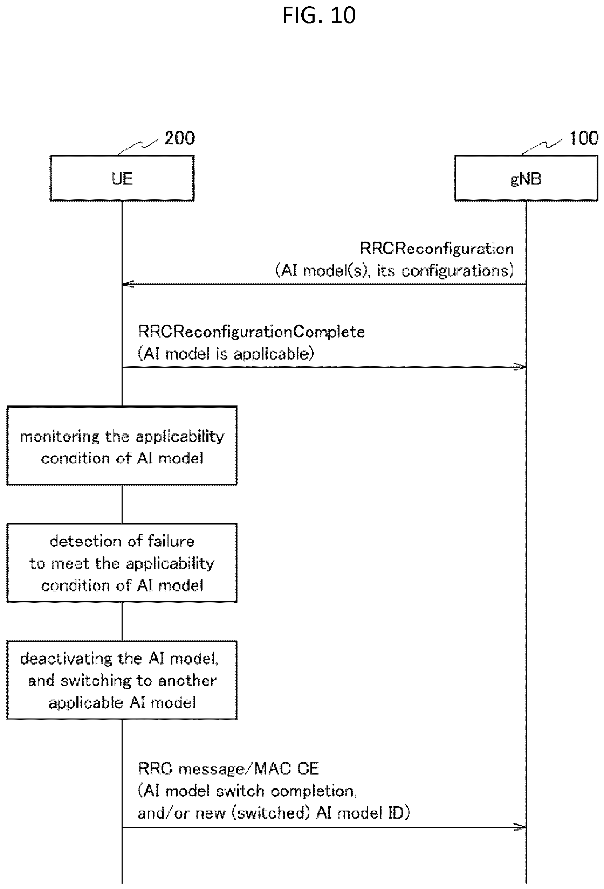

Operation Example 2-3 is a modification of the switching of the learning model in Operation Examples 2-1 and 2-2. Specifically, Operation Example 2-3 is an operation example in which the UE 200 autonomously performs the switching of the learning model, which was performed by the instruction from the gNB 100 in Operation Examples 2-1 and 2-2. Hereinafter, Operation Example 2-3 will be described with reference to Fig. 10.

Prior to the autonomous switching of the learning model by the UE 200, a specific switching condition of the learning model is set in advance from the gNB 100. This advance setting (pre-configuration) may be performed via, for example, the RRCReconfiguration message shown in Fig. 10, but is not limited thereto, and may be performed before or after that. Hereinafter, an example will be described in which the switching condition of the learning model is set simultaneously with the setting of three learning models performed via the RRCReconfiguration message.

The UE 200 receives learning models A, B, and C via the RRCReconfiguration message. It is assumed that the learning model A corresponds to a UE moving speed of 30 km/h, the learning model B corresponds to a UE moving speed of 60 km/h, and the learning model C corresponds to a UE moving speed of 120 km/h. As the switching condition of the learning model, for example, a timer may be started when the UE moving speed exceeds a predetermined threshold, and the UE moving speed may not fall below the predetermined threshold before the timer expires.

Specifically, when the UE 200 is using the learning model A, the timer starts when the UE moving speed exceeds 60 km/h. If the UE moving speed does not become 60 km/h or less before the timer expires, the UE 200 determines that the switching condition of the learning model is satisfied (detection of failure to meet the applicability condition of AI model in the figure). The UE 200 deactivates the learning model A and switches to the learning model B (deactivating the AI model, and switching to another applicable AI model in the figure).

Furthermore, the UE 200 may report to the gNB 100 that it has autonomously switched the learning model or deactivated (and activated another learning model) via an RRC message or a MAC CE. Further, if there is no appropriate learning model, the UE 200 may propose/request a necessary learning model to the gNB 100.

Note that the switching condition related to the UE moving speed in the description of Operation Example 2-3 is an example, and may be read as a switching condition related to a channel model (e.g., UMa/UMi), an ISD, a frequency, a BWP, an antenna port layout, and a size of the learning model.

### (3.2.3) Operation Example 3

Operation Example 3 is a modification in which a restriction is imposed on the deactivation of the learning model in Operation Example 2 (2-1, 2-2, 2-3). That is, the UE 200 may activate at least one learning model regardless of the instruction from the gNB 100 or the switching condition of the learning model. Such a learning model may be set in advance as a default learning model. The default learning model may be, for example, a general-purpose learning model. When all the learning models do not satisfy the applicability condition, the UE 200 may fall back to the default learning model regardless of the instruction from the gNB 100 or the switching condition of the learning model.

The default learning model may be referred to as a common AI model or a reference AI model. The common AI model may include a sub common AI model for each use case. The sub common AI model may be, for example, a common AI model for beam management, a common AI model for CSI prediction, or a common AI model for positioning. The common AI model or the sub common AI model may be transmitted from the gNB 100 forming a source cell to the gNB 100 forming a target cell, for example, at the time of handover. Thereby, the gNB 100 forming the target cell does not need to download the learning model again from an OAM (Operations, Administration and Maintenance) responsible for maintenance, management, and operation functions in the network or the like, and can take over the learning model, so that the AI/ML function can be used quickly.

When all the learning models do not satisfy the applicability condition, the UE 200 may report to that effect to the gNB 100. Furthermore, the UE 200 may propose/request a default learning model (a learning model that is always activated) to the gNB 100. In response to the proposal/request of the UE 200, the gNB 100 may configure the default learning model (a learning model that is always activated) and identification information (for example, AI model ID) of the learning model in the UE 200.

The default learning model may be configured in advance at the time of shipment of the UE 200, may be configured in advance by a user of the UE 200, or may be configured in advance from the gNB 100. When configured from the gNB 100, the default learning model and identification information (for example, AI model ID) of the learning model may be configured via, for example, RRCReconfiguration. Alternatively, when the learning model satisfying the applicability condition becomes the last one, the UE 200 may always activate the learning model as the default learning model.

### (4) Other Embodiments

Although the contents of the present invention have been described above in accordance with the embodiments, it is obvious to those skilled in the art that the present invention is not limited to these descriptions, and various modifications and improvements are possible.

In the above disclosure, the proposal/request of the UE 200 may be executed based on a validity period configured in the learning model. Thereby, communication resources can be utilized more effectively.

In the above disclosure, the learning model optimizes processing related to Channel State Information (CSI) feedback, beam management (BM), positioning, mobility, network slicing, QoE, and the like, but is not limited thereto. For example, the learning model may suppress call blocking of the UE 200, Radio Link Failure (RLF), or minimization of unnecessary Handover (HO), in other words, may optimize mobility of the UE 200.

In the above disclosure, the learning model may be replaced with another term meaning a similar model in addition to the AI/ML model.

In the above disclosure, the learning model is configured or transmitted by the gNB 100, but is not limited thereto. Other configurations on the network side may configure or transmit the learning model.

The above-described operation examples may be combined and applied in a complex manner as long as no contradiction arises.

In the above disclosure, configure, activate, update, indicate, enable, specify, and select may be read interchangeably. Similarly, link, associate, correspond, and map may be read interchangeably, and allocate, assign, monitor, and map may be read interchangeably.

Furthermore, specific, dedicated, UE-specific, and UE-dedicated may be read interchangeably. Similarly, common, shared, group-common, UE-common, and UE-shared may be read interchangeably.

The block diagrams (Figs. 4 and 5) used in the description of the above embodiments show blocks in units of functions. Those functional blocks (structural components) can be realized by a desired combination of at least one of hardware and software. Means for realizing each functional block is not particularly limited. That is, each functional block may be realized using one device physically or logically coupled, or may be realized by connecting two or more devices physically or logically separated directly or indirectly (for example, using wired, wireless, or the like) and using these plurality of devices. The functional block may be realized by combining software with the one device or the plurality of devices.

Functions include, judging, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like but are not limited thereto. For example, a functional block (configuration unit) that functions transmission is referred to as a transmission unit or a transmitter. Means for realizing each functional block is not particularly limited as described above.

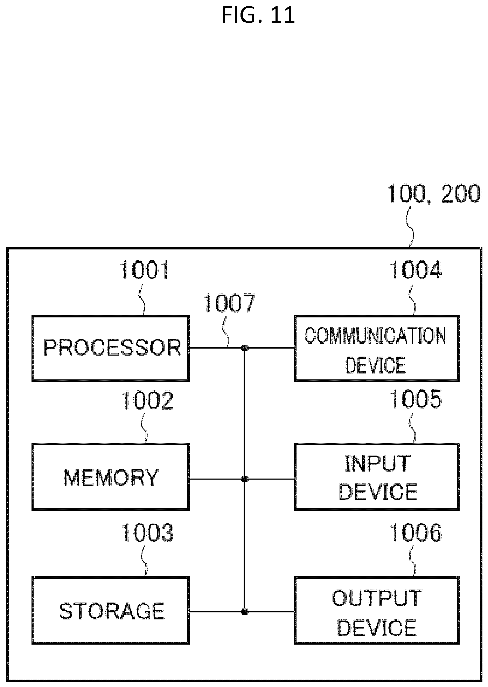

Furthermore, the gNB 100 and the UE 200 (the devices) described above may function as a computer that performs processing of the radio communication method of the present disclosure. Fig. 11 is a diagram showing an example of a hardware configuration of the device. As shown in Fig. 11, the device may be configured as a computer device including a processor 1001, a memory 1002, a storage 1003, a communication device 1004, an input device 1005, an output device 1006, a bus 1007, and the like.

Note that in the following description, the term "device" can be read as a circuit, a device, a unit, or the like. The hardware configuration of the device may be configured to include one or a plurality of the devices shown in the figure, or may be configured not to include some of the devices.

Each functional block (Figs. 4 and 5) of the device is realized by any hardware element of the computer device or a combination of the hardware elements.

Further, each function in the device is realized by reading predetermined software (program) onto hardware such as the processor 1001 and the memory 1002, so that the processor 1001 performs calculation and controls communication by the communication device 1004 or controls at least one of reading and writing of data in the memory 1002 and the storage 1003.

The processor 1001 controls the entire computer by operating an operating system, for example. The processor 1001 may be configured by a Central Processing Unit (CPU) including an interface with peripheral devices, a control device, an arithmetic device, a register, and the like.

Further, the processor 1001 reads a program (program code), a software module, data, and the like from at least one of the storage 1003 and the communication device 1004 to the memory 1002, and executes various processes in accordance with them. As the program, a program that causes a computer to execute at least a part of the operations described in the above embodiments is used. Furthermore, the various processes described above may be executed by one processor 1001, or may be executed simultaneously or sequentially by two or more processors 1001. The processor 1001 may be implemented by one or more chips. Note that the program may be transmitted from a network via a telecommunication line.

The memory 1002 is a computer-readable recording medium, and may be configured by at least one of, for example, a Read Only Memory (ROM), an Erasable Programmable ROM (EPROM), an Electrically Erasable Programmable ROM (EEPROM), and a Random Access Memory (RAM). The memory 1002 may be referred to as a register, a cache, a main memory (main storage device), or the like. The memory 1002 can store a program (program code), a software module, and the like capable of executing the method according to one embodiment of the present disclosure.

The storage 1003 is a computer-readable recording medium, and may be configured by at least one of, for example, an optical disk such as a Compact Disc ROM (CD-ROM), a hard disk drive, a flexible disk, a magneto-optical disk (for example, a compact disk, a digital versatile disk, a Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The recording medium described above may be, for example, a database, a server, or other appropriate media including at least one of the memory 1002 and the storage 1003.

The communication device 1004 is hardware (transmission/reception device) for performing communication between computers via at least one of a wired network and a wireless network, and is also referred to as, for example, a network device, a network controller, a network card, a communication module, or the like.

The communication device 1004 may be configured to include, for example, a high-frequency switch, a duplexer, a filter, a frequency synthesizer, and the like in order to realize at least one of Frequency Division Duplex (FDD) and Time Division Duplex (TDD).

The input device 1005 is an input device (for example, a keyboard, a mouse, a microphone, a switch, a button, a sensor, or the like) that accepts input from the outside. The output device 1006 is an output device (for example, a display, a speaker, an LED lamp, or the like) that performs output to the outside. Note that the input device 1005 and the output device 1006 may be an integrated configuration (for example, a touch panel).

Further, each device such as the processor 1001 and the memory 1002 is connected by a bus 1007 for communicating information. The bus 1007 may be configured using a single bus, or may be configured using a different bus for each device.

Furthermore, the device may be configured to include hardware such as a microprocessor, a Digital Signal Processor (DSP), an Application Specific Integrated Circuit (ASIC), a Programmable Logic Device (PLD), and a Field Programmable Gate Array (FPGA), and a part or all of each functional block may be realized by the hardware. For example, the processor 1001 may be implemented using at least one of these hardwares.

Notification of information is not limited to the aspects/embodiments described in the present disclosure, and may be performed using other methods. For example, notification of information may be performed by physical layer signaling (for example, Downlink Control Information (DCI), Uplink Control Information (UCI)), higher layer signaling (for example, Radio Resource Control (RRC) signaling, Medium Access Control (MAC) signaling), broadcast information (Master Information Block (MIB), System Information Block (SIB)), other signals, or a combination thereof. Note that the RRC signaling may be referred to as an RRC message, and may be, for example, an RRC Connection Setup message, an RRC Connection Reconfiguration message, or the like.

Each aspect/embodiment described in the present disclosure may be applied to a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems, and/or a next generation system extended based on these systems. Further, a plurality of systems may be combined (for example, a combination of at least one of LTE and LTE-A with 5G, or the like) and applied.

The processing procedures, sequences, flowcharts, and the like of each aspect/embodiment described in the present disclosure may be changed in the order as long as there is no contradiction. For example, regarding the methods described in the present disclosure, elements of various steps are presented using an illustrative order, and are not limited to the specific order presented.

The specific operation assumed to be performed by the base station in the present disclosure may be performed by an upper node in some cases. It is obvious that in a network including one or a plurality of network nodes having a base station, various operations performed for communication with the terminal can be performed by at least one of the base station and other network nodes other than the base station (for example, MME or S-GW may be considered, but not limited thereto). The case where there is one other network node other than the base station has been illustrated above, but a combination of a plurality of other network nodes (for example, MME and S-GW) may be used.

Information, signals, and the like can be output from a higher layer (or a lower layer) to a lower layer (or a higher layer). They may be input and output via a plurality of network nodes.

The input and output information may be stored in a specific place (for example, a memory) or may be managed using a management table. The input and output information may be overwritten, updated, or appended. The output information may be deleted. The input information may be transmitted to other devices.

Determination may be performed by a value represented by 1 bit (0 or 1), may be performed by a Boolean value (true or false), or may be performed by comparison of numerical values (for example, comparison with a predetermined value).

Each aspect/embodiment described in the present disclosure may be used alone, may be used in combination, or may be switched in accordance with execution. Further, notification of predetermined information (for example, notification of "being X") is not limited to being performed explicitly, but may be performed implicitly (for example, not notifying the predetermined information).

Software should be interpreted broadly to mean instructions, instruction sets, code, code segments, program code, programs, subprograms, software modules, applications, software applications, software packages, routines, subroutines, objects, executable files, execution threads, procedures, functions, and the like, regardless of whether it is referred to as software, firmware, middleware, microcode, hardware description language, or any other name.

Further, software, instructions, information, and the like may be transmitted and received via a transmission medium. For example, when software is transmitted from a website, a server, or other remote sources using at least one of wired technology (coaxial cable, optical fiber cable, twisted pair, Digital Subscriber Line (DSL), etc.) and wireless technology (infrared, microwave, etc.), at least one of these wired technology and wireless technology is included within the definition of the transmission medium.

Information, signals, and the like described in the present disclosure may be represented using any of various different technologies. For example, data, instructions, commands, information, signals, bits, symbols, chips, and the like that may be mentioned throughout the above description may be represented by voltage, current, electromagnetic waves, magnetic fields or magnetic particles, optical fields or photons, or any combination thereof.

Note that the terms described in the present disclosure and the terms necessary for understanding the present disclosure may be replaced with terms having the same or similar meanings. For example, at least one of the channel and the symbol may be a signal (signaling). Also, the signal may be a message. Further, the Component Carrier (CC) may be referred to as a carrier frequency, a cell, a frequency carrier, or the like.

The terms "system" and "network" used in the present disclosure are used interchangeably.

Further, the information, parameters, and the like described in the present disclosure may be represented using absolute values, may be represented using relative values from predetermined values, or may be represented using other corresponding information. For example, radio resources may be indicated by an index.

The names used for the parameters described above are not limiting names in any respect. Furthermore, mathematical expressions and the like using these parameters may differ from those explicitly disclosed in the present disclosure. Since various channels (for example, PUCCH, PDCCH, etc.) and information elements can be identified by any suitable names, various names assigned to these various channels and information elements are not limiting names in any respect.

In the present disclosure, the terms "Base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may be referred to by terms such as macro cell, small cell, femto cell, and pico cell.

The base station can accommodate one or a plurality of (for example, three) cells (also referred to as sectors). When the base station accommodates a plurality of cells, the entire coverage area of the base station can be divided into a plurality of smaller areas, and each smaller area can also provide communication services by a base station subsystem (for example, an indoor small base station (Remote Radio Head: RRH)).

The term "cell" or "sector" refers to a part or the whole of the coverage area of at least one of the base station and the base station subsystem that performs communication services in this coverage.

In the present disclosure, the terms "Mobile Station (MS)", "user terminal", "User Equipment (UE)", "terminal", and the like can be used interchangeably.

The mobile station may be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be referred to as a transmission device, a reception device, a communication device, or the like. Note that at least one of the base station and the mobile station may be a device mounted on a moving body, the moving body itself, or the like. The moving body may be a vehicle (for example, a car, an airplane, etc.), a moving body that moves unmanned (for example, a drone, an automated driving car, etc.), or a robot (manned type or unmanned type). Note that at least one of the base station and the mobile station includes a device that does not necessarily move during communication operation. For example, at least one of the base station and the mobile station may be an Internet of Things (IoT) device such as a sensor.

Further, the base station in the present disclosure may be read as a mobile station (user terminal, hereinafter the same). For example, each aspect/embodiment of the present disclosure may be applied to a configuration in which communication between a base station and a mobile station is replaced with communication between a plurality of mobile stations (for example, may be referred to as Device-to-Device (D2D), Vehicle-to-Everything (V2X), etc.). In this case, the mobile station may have the functions of the base station. Further, terms such as "uplink" and "downlink" may be replaced with terms corresponding to terminal-to-terminal communication (for example, "side"). For example, an uplink channel, a downlink channel, and the like may be read as a side channel.

Similarly, the mobile station in the present disclosure may be read as a base station. In this case, the base station may have the functions of the mobile station.

A radio frame may be composed of one or a plurality of frames in the time domain. Each of the one or plurality of frames in the time domain may be referred to as a subframe.

A subframe may be further composed of one or a plurality of slots in the time domain. The subframe may be a fixed time length (for example, 1 ms) that does not depend on numerology.

The numerology may be a communication parameter applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in the frequency domain, specific windowing processing performed by a transceiver in the time domain, and the like.

A slot may be composed of one or a plurality of symbols (Orthogonal Frequency Division Multiplexing (OFDM) symbols, Single Carrier Frequency Division Multiple Access (SC-FDMA) symbols, etc.) in the time domain. The slot may be a time unit based on numerology.

A slot may include a plurality of mini-slots. Each mini-slot may be composed of one or a plurality of symbols in the time domain. Further, the mini-slot may be referred to as a sub-slot. The mini-slot may be composed of fewer symbols than the slot. A PDSCH (or PUSCH) transmitted in a time unit larger than the mini-slot may be referred to as PDSCH (or PUSCH) mapping type A. A PDSCH (or PUSCH) transmitted using the mini-slot may be referred to as PDSCH (or PUSCH) mapping type B.

A radio frame, a subframe, a slot, a mini-slot, and a symbol all represent a time unit when transmitting a signal. The radio frame, the subframe, the slot, the mini-slot, and the symbol may be called by other names corresponding thereto.

For example, one subframe may be referred to as a Transmission Time Interval (TTI), a plurality of consecutive subframes may be referred to as a TTI, or one slot or one mini-slot may be referred to as a TTI. That is, at least one of the subframe and the TTI may be a subframe (1 ms) in existing LTE, may be a period shorter than 1 ms (for example, 1 to 13 symbols), or may be a period longer than 1 ms. Note that the unit representing the TTI may be referred to as a slot, a mini-slot, or the like instead of the subframe.

Here, the TTI refers to, for example, a minimum time unit of scheduling in radio communication. For example, in the LTE system, the base station performs scheduling of allocating radio resources (frequency bandwidth, transmission power, etc. that can be used in each user terminal) to each user terminal in units of TTI. Note that the definition of TTI is not limited to this.

The TTI may be a transmission time unit of a channel-coded data packet (transport block), a code block, a codeword, or the like, or may be a processing unit of scheduling, link adaptation, or the like. Note that when the TTI is given, a time interval (for example, the number of symbols) in which the transport block, the code block, the codeword, or the like is actually mapped may be shorter than the TTI.

Note that when one slot or one mini-slot is referred to as a TTI, one or more TTIs (that is, one or more slots or one or more mini-slots) may be the minimum time unit of scheduling. Further, the number of slots (the number of mini-slots) constituting the minimum time unit of scheduling may be controlled.

A TTI having a time length of 1 ms may be referred to as a normal TTI (TTI in LTE Rel. 8-12), a normal TTI, a long TTI, a normal subframe, a normal subframe, a long subframe, a slot, or the like. A TTI shorter than the normal TTI may be referred to as a shortened TTI, a short TTI, a partial or fractional TTI, a shortened subframe, a short subframe, a mini-slot, a sub-slot, a slot, or the like.

Note that the long TTI (for example, normal TTI, subframe, etc.) may be read as a TTI having a time length exceeding 1 ms, and the short TTI (for example, shortened TTI, etc.) may be read as a TTI having a TTI length less than the TTI length of the long TTI and 1 ms or more.

A Resource Block (RB) is a resource allocation unit in the time domain and the frequency domain, and may include one or a plurality of consecutive subcarriers in the frequency domain. The number of subcarriers included in the RB may be the same regardless of numerology, and may be, for example, 12. The number of subcarriers included in the RB may be determined based on numerology.

Further, the time domain of the RB may include one or a plurality of symbols, and may be a length of one slot, one mini-slot, one subframe, or one TTI. One TTI, one subframe, and the like may be composed of one or a plurality of resource blocks, respectively.

Note that one or a plurality of RBs may be referred to as a Physical Resource Block (Physical RB: PRB), a Sub-Carrier Group (SCG), a Resource Element Group (REG), a PRB pair, an RB pair, or the like.

Further, the resource block may be composed of one or a plurality of Resource Elements (RE). For example, one RE may be a radio resource region of one subcarrier and one symbol.

A Bandwidth Part (BWP) (may be referred to as a partial bandwidth or the like) may represent a subset of consecutive common resource blocks (common RBs) for certain numerology in a certain carrier. Here, the common RB may be specified by an index of the RB based on a common reference point of the carrier. The PRB may be defined in a certain BWP and numbered within the BWP.

The BWP may include a BWP for UL (UL BWP) and a BWP for DL (DL BWP). One or a plurality of BWPs may be configured within one carrier for the UE.

At least one of the configured BWPs may be active, and the UE does not have to assume transmitting and receiving a predetermined signal/channel outside the active BWP. Note that "cell", "carrier", and the like in the present disclosure may be read as "BWP".

The structures of the radio frame, subframe, slot, mini-slot, symbol, and the like described above are merely examples. For example, configurations such as the number of subframes included in a radio frame, the number of slots per subframe or radio frame, the number of mini-slots included in a slot, the number of symbols and RBs included in a slot or a mini-slot, the number of subcarriers included in an RB, and the number of symbols, symbol length, Cyclic Prefix (CP) length, and the like in a TTI can be variously changed.

The terms "connected", "coupled", or any variation thereof means any direct or indirect connection or coupling between two or more elements, and can include the presence of one or more intermediate elements between two elements "connected" or "coupled" to each other. The coupling or connection between elements may be physical, logical, or a combination thereof. For example, "connection" may be read as "access". As used in the present disclosure, two elements can be considered to be "connected" or "coupled" to each other using at least one of one or more wires, cables, and printed electrical connections, and as some non-limiting and non-inclusive examples, using electromagnetic energy having wavelengths in the radio frequency domain, the microwave domain, and the optical (both visible and invisible) domain, and the like.

The reference signal may be abbreviated as Reference Signal (RS), and may be referred to as a pilot according to the standard to be applied.

The description "based on" used in the present disclosure does not mean "based only on" unless otherwise specified. In other words, the description "based on" means both "based only on" and "based at least on".

The "means" in the configuration of each of the above devices may be replaced with "unit", "circuit", "device", or the like.

Any reference to elements using designations such as "first", "second", and the like used in the present disclosure does not generally limit the amount or order of those elements. These designations can be used in the present disclosure as a convenient way to distinguish between two or more elements. Thus, references to the first and second elements do not imply that only two elements can be employed there, or that the first element must precede the second element in some way.

In the present disclosure, when "include", "including", and variations thereof are used, these terms are intended to be inclusive, similar to the term "comprising". Furthermore, the term "or" used in the present disclosure is intended not to be an exclusive OR.

In the present disclosure, for example, when articles such as a, an, and the like are added by translation, the present disclosure may include that nouns following these articles are plural.

The terms "determining" and "determining" used in the present disclosure may encompass a wide variety of operations. "Determining" and "determining" may include, for example, deeming that judging, calculating, computing, processing, deriving, investigating, looking up, search, inquiry (for example, search in a table, a database, or another data structure), or ascertaining is "determined" or "determined". Further, "determining" and "determining" may include deeming that receiving (for example, receiving information), transmitting (for example, transmitting information), input, output, or accessing (for example, accessing data in a memory) is "determined" or "determined". Further, "determining" and "determining" may include deeming that resolving, selecting, choosing, establishing, comparing, or the like is "determined" or "determined". That is, "determining" and "determining" may include deeming that some operation is "determined" or "determined". Further, "determining (determining)" may be read as "assuming", "expecting", "considering", or the like.

In the present disclosure, the term "A and B are different" may mean "A and B are different from each other". Note that the term may mean "A and B are each different from C". Terms such as "separate", "coupled", and the like may be interpreted similarly to "different".

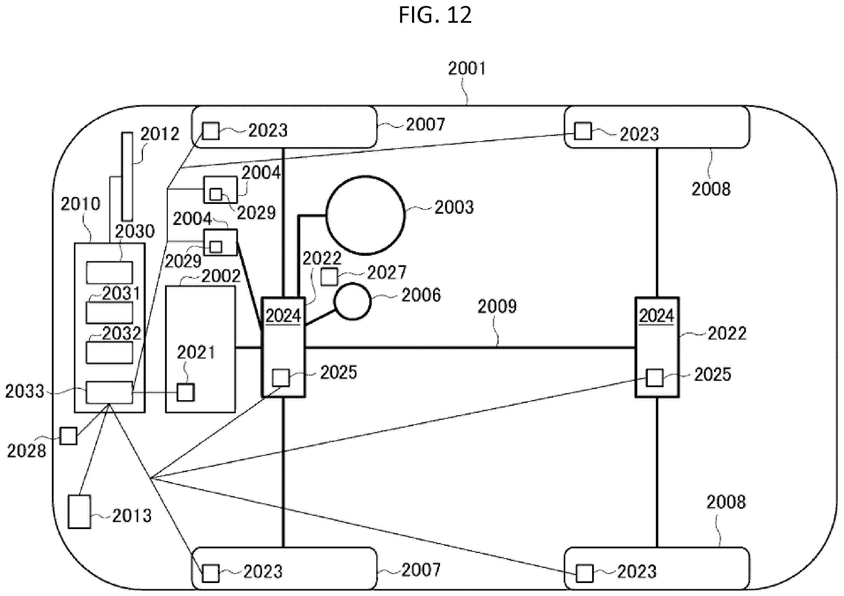

Fig. 12 shows a configuration example of a vehicle 2001. As shown in Fig. 12, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 is composed of, for example, an engine, a motor, or a hybrid of an engine and a motor.

The steering unit 2003 includes at least a steering wheel (also referred to as a handle), and is configured to steer at least one of the front wheels and the rear wheels based on an operation of the steering wheel operated by a user.

The electronic control unit 2010 is composed of a microprocessor 2031, a memory (ROM, RAM) 2032, and a communication port (IO port) 2033. Signals from the various sensors 2021 to 2027 provided in the vehicle are input to the electronic control unit 2010. The electronic control unit 2010 may be referred to as an ECU (Electronic Control Unit).

Examples of the signals from the various sensors 2021 to 2028 include a current signal from the current sensor 2021 sensing a current of the motor, a rotation speed signal of the front wheels or the rear wheels acquired by the rotation speed sensor 2022, an air pressure signal of the front wheels or the rear wheels acquired by the air pressure sensor 2023, a vehicle speed signal acquired by the vehicle speed sensor 2024, an acceleration signal acquired by the acceleration sensor 2025, a depression amount signal of the accelerator pedal acquired by the accelerator pedal sensor 2029, a depression amount signal of the brake pedal acquired by the brake pedal sensor 2026, an operation signal of the shift lever acquired by the shift lever sensor 2027, and a detection signal for detecting an obstacle, a vehicle, a pedestrian, or the like acquired by the object detection sensor 2028.

The information service unit 2012 is composed of various devices for providing various information such as driving information, traffic information, and entertainment information, such as a car navigation system, an audio system, a speaker, a television, and a radio, and one or more ECUs controlling these devices. The information service unit 2012 provides various multimedia information and multimedia services to an occupant of the vehicle 2001 using information acquired from an external device via the communication module 2013 or the like.

The driver assistance system unit 2030 is composed of various devices for providing functions for preventing accidents in advance or reducing a driving load of a driver, such as a millimeter wave radar, LiDAR (Light Detection and Ranging), a camera, a positioning locator (for example, GNSS, etc.), map information (for example, High Definition (HD) map, Automated Vehicle (AV) map, etc.), a gyro system (for example, IMU (Inertial Measurement Unit), INS (Inertial Navigation System), etc.), an AI (Artificial Intelligence) chip, and an AI processor, and one or more ECUs controlling these devices. Further, the driver assistance system unit 2030 transmits and receives various information via the communication module 2013 to realize a driving support function or an automated driving function.

The communication module 2013 can communicate with the microprocessor 2031 and components of the vehicle 2001 via a communication port. For example, the communication module 2013 transmits and receives data to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and the sensors 2021 to 2028 provided in the vehicle 2001 via the communication port 2033.

The communication module 2013 is a communication device capable of being controlled by the microprocessor 2031 of the electronic control unit 2010 and capable of communicating with an external device. For example, the communication module 2013 transmits and receives various information to and from an external device via radio communication. The communication module 2013 may be located either inside or outside the electronic control unit 2010. The external device may be, for example, a base station, a mobile station, or the like.

The communication module 2013 transmits the current signal from the current sensor input to the electronic control unit 2010 to the external device via radio communication. Further, the communication module 2013 also transmits, to the external device via radio communication, the rotation speed signal of the front wheels or the rear wheels acquired by the rpm sensor 2022, the air pressure signal of the front wheels or the rear wheels acquired by the air pressure sensor 2023, the vehicle speed signal acquired by the vehicle speed sensor 2024, the acceleration signal acquired by the acceleration sensor 2025, the depression amount signal of the accelerator pedal acquired by the accelerator pedal sensor 2029, the depression amount signal of the brake pedal acquired by the brake pedal sensor 2026, the operation signal of the shift lever acquired by the shift lever sensor 2027, and the detection signal for detecting an obstacle, a vehicle, a pedestrian, or the like acquired by the object detection sensor 2028, which are input to the electronic control unit 2010.

The communication module 2013 receives various kinds of information (traffic information, signal information, Inter-vehicular distance information, etc.) transmitted from an external device and displays them to the information service unit 2012 provided in the vehicle. The communication module 2013 also stores various information received from external devices in the memory 2032 available by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2028, and the like provided in the vehicle 2001.

Although the present disclosure has been described in detail above, it is obvious to those skilled in the art that the present disclosure is not limited to the embodiments described in the present disclosure. The present disclosure can be implemented as modifications and variations without departing from the spirit and scope of the present disclosure as defined by the description of the claims. Therefore, the description of the present disclosure is for the purpose of illustration and description, and does not have any limiting meaning to the present disclosure.

### (Supplementary Note)

The disclosure described above may be expressed as follows.

The first aspect is a terminal comprising: a control unit configured to determine whether estimation accuracy of a learning model falls below a first threshold; and a transmission unit configured to transmit that the learning model has become not applicable when the estimation accuracy falls below the first threshold.

The second aspect is the terminal according to the first aspect, wherein the control unit counts the number of times the estimation accuracy falls below the first threshold, and the transmission unit transmits that the learning model has become not applicable when the number of times exceeds a second threshold.

The third aspect is the terminal according to the first aspect, wherein the control unit starts a timer measuring a period when the estimation accuracy falls below the first threshold, and the transmission unit transmits that the learning model has become not applicable when the timer expires without the estimation accuracy returning to the first threshold or higher in the period.

The fourth aspect is the terminal according to any one of the first to third aspects, wherein the control unit deactivates the learning model that has become not applicable, excluding a learning model set in advance.

The fifth aspect is the terminal according to any one of the first to fourth aspects, wherein the control unit estimates a reason why the learning model has become not applicable, and the transmission unit transmits the reason.

The sixth aspect is the terminal according to the fifth aspect, wherein the transmission unit transmits a request for a necessary learning model based on the reason.

### DESCRIPTION OF REFERENCE NUMERALS

10 Radio communication system
20 NG-RAN
100 gNB
110 Transmission/reception unit
120 Message generation unit
130 Model storage unit
160 Estimation accuracy determination unit
170 Control unit
200 UE
210 Transmission/reception unit
220 Message generation unit
230 Model storage unit
240 Model determination unit
250 Model request unit
260 Estimation accuracy determination unit
270 Control unit
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Rotation speed sensor
2023 Air pressure sensor
2024 Vehicle speed sensor
2025 Acceleration sensor
2026 Brake pedal sensor
2027 Shift lever sensor
2028 Object detection sensor
2029 Accelerator pedal sensor
2030 Driving assistance system unit
2031 Microprocessor
2032 Memory (ROM, RAM)
2033 Communication port

## Claims

1. A terminal comprising:
a control unit configured to determine whether estimation accuracy of a learning model falls below a first threshold; and
a transmission unit configured to transmit that the learning model has become not applicable when the estimation accuracy falls below the first threshold.

2. The terminal according to claim 1, wherein
the control unit counts a number of times the estimation accuracy falls below the first threshold, and
the transmission unit transmits that the learning model has become not applicable when the number of times exceeds a second threshold.

3. The terminal according to claim 1, wherein
the control unit starts a timer measuring a period when the estimation accuracy falls below the first threshold, and
the transmission unit transmits that the learning model has become not applicable when the timer expires without the estimation accuracy returning to the first threshold or higher in the period.

4. The terminal according to claim 1, wherein the control unit deactivates the learning model that has become not applicable, excluding a learning model set in advance.

5. The terminal according to claim 1, wherein
the control unit estimates a reason why the learning model has become not applicable, and
the transmission unit transmits the reason.

6. The terminal according to claim 5, wherein the transmission unit transmits a request for a necessary learning model based on the reason.
